# EUROPEAN PATENT SPECIFICATION

(11) **EP 3 395 684 B1**
(45) Date of publication and mention of the grant of the patent: **09.09.2020**
(21) Application number: 18168957.1
(22) Date of filing: 24.04.2018
(51) Int. Cl.: B64D 11/00, B64D 11/04

(54) **VEHICLE ATTENDANT TASK MANAGEMENT SYSTEMS AND METHODS**
FAHRZEUGBEGLEITERAUFGABENVERWALTUNGSSYSTEME UND -VERFAHREN
SYSTÈMES ET PROCÉDÉS DE GESTION DE TÂCHES D'OPÉRATEUR DE VÉHICULE

(30) Priority: 25.04.2017 US 201715496134
(43) Date of publication of application: 31.10.2018
(73) Proprietor: The Boeing Company, Chicago, IL 60606-2016 (US)
(72) Inventor: CLOYD, Cedar, Chicago, IL 60606-2016 (US); NICKS, Eric Lee, Chicago, IL60606-2016 (US)
(74) Representative: Boult Wade Tennant LLP

(56) References cited:
- WO-A1-2016/060561
- US-A1- 2009 112 377
- US-A1- 2016 304 207
- US-A1- 2017 103 360

## Description

### FIELD OF EMBODIMENTS OF THE DISCLOSURE

Embodiments of the present disclosure generally relate to systems and methods of managing tasks to be performed by attendants onboard a vehicle, such as a commercial aircraft.

### BACKGROUND OF THE DISCLOSURE

Commercial aircraft typically include an interior cabin that may be divided into numerous sections. A cockpit is generally separated from a passenger cabin, which may include a first class section, a business class section, and an economy section. The passenger cabin may also include one or more work areas for flight personnel, such as galleys, which may include food and beverage storage structures. One or more aisles pass through the passenger cabin and connect each of the passenger sections to one or more paths to one or more doors of the aircraft.

During a flight, passengers may request service from a flight attendant. For example, a passenger may request a beverage during the flight. As another example, a passenger may request a pillow or blanket. As yet another example, a passenger may request a newspaper or magazine to read. In order to request service, a passenger typically presses an overhead call button. As the call button is engaged, the button or a light over the seat of the requesting passenger illuminates and/or an audio signal is emitted in order to draw the attention of the flight attendant.

However, the illumination and/or audio signal may disturb other passengers. As an example, a passenger seated next to a requesting passenger may be asleep and/or trying to sleep during the flight. The illuminated call light and/or the emitted audio signal may awaken the other passenger.

Further, during a typical flight, numerous flight attendants may attend to passengers. Certain flight attendants may perform a greater number of tasks than other flight attendants during a flight. As an example, a particular section of a cabin of the aircraft may include passengers who happen to request the attention of the flight attendant assigned that section more than another section of the cabin. Accordingly, at least one flight attendant may be responsible for a greater number of tasks during a flight than other flight attendants.

WO-A1-2016/060561, in accordance with its abstract, states a passenger catering system for a passenger transport vehicle operated via a server and a method for operating a passenger catering system by using a server, the server comprising a processor and a memory unit, wherein the processor is connected to the memory unit and wherein the processor is configured to execute the following steps: receiving first input data from a passenger interface device; comparing the first input data with stock data in a database stored in the memory unit; and transmitting first output data to a crew interface device.

US-A1-2016/304207, in accordance with its abstract, states an aircraft cabin having seats at least one of which is paired with a passenger terminal to communicate wirelessly. A control unit of the seat transmits data on the capabilities for adjusting the seat to the passenger terminal. The passenger terminal transmits instructions for adjusting the seat to the control unit of the seat. The passenger terminal includes application software to interpret the data received from the control unit of the seat to display a representation of the possible adjustments on a screen of the passenger terminal and to interpret actions by an operator on keys of the passenger terminal as instructions for adjusting the seat. A main computer of the cabin handles the communication between the passenger terminals and crew terminals to transmit, via displays on screens of the terminals, requests from a passenger to the crew and from the crew to a passenger or group of passengers.

US-A1-2009/112377, in accordance with its abstract, states a system for providing information to at least one passenger onboard a mobile platform (such as a train, marine vessel, aircraft or automobile). The system includes a display device that displays the information. The system also includes a source of user input coupled to the display device that enables the at least one passenger to request the information. The information includes at least galley information. The system further includes a galley control module that generates galley data that includes at least one food service item available onboard the mobile platform, and a graphical user interface module that displays the at least one food service item available onboard the mobile platform to enable the at least one passenger to select at least one of the at least one food service item.

### SUMMARY OF THE DISCLOSURE

A need exists for a system and method of efficiently assigning tasks to attendants on board a vehicle, such as a commercial aircraft. A need exists for directly notifying the attendants of service requests from passengers. A need exists for a system and method of monitoring activity of flight attendants.

With those needs in mind, described herein is a task management system that is configured to assign tasks to one or more attendants of a vehicle, the task management system comprising: one or more passenger interfaces associated with one or more passenger seats within an interior cabin of the vehicle, wherein the one or more passenger interfaces are configured to output service request signals indicative of service requests from passengers that are input into the one or more passenger interfaces; one or more attendant devices that are configured to be carried by the one or more attendants; and a task manager including a management control unit that is in communication with the one or more passenger interfaces and the one or more attendant devices, wherein the task manager is configured to analyze attendant workloads, to assign tasks associated with the service requests to a particular attendant device ; and wherein the management control unit is configured to receive the service request signals from the one or more passenger interfaces and to assign tasks to the one or more attendant devices based, at least in part, on the service request signals, attendant workloads, and a distance to a particular passenger and/or a distance to galley equipment.

Also described herein is a method for assigning tasks to one or more attendants of a vehicle, the method comprising: associating one or more passenger interfaces with one or more passenger seats within an interior cabin of the vehicle; receiving, from the one or more passenger interfaces, service request signals indicative of service requests from passengers that are input into the one or more passenger interfaces; associating one or more attendant devices with the one or more attendants that carry the one or more attendant devices; communicating between a management control unit of a task manager and the one or more passenger interfaces and the one or more attendant devices, wherein the communicating comprises receiving, at the management control unit, the service request signals from the one or more passenger interfaces, and wherein the task manager is configured to analyze attendant workloads, to assign tasks associated with the service requests to a particular attendant device; and assigning, by the management control unit, tasks to the one or more attendant devices based, at least in part, on the service request signals, attendant workloads, and a distance to a particular passenger and/or a distance to galley equipment.

In at least one embodiment, at least one of the attendant devices includes a smart watch that is configured to be worn on a wrist. In at least one embodiment, at least one of the passenger interfaces includes an entertainment system secured to a seat. In at least one embodiment, at least one of the attendant devices includes a display that is configured to show the tasks assigned by the management control unit.

The task management system may also include galley equipment within the interior cabin of the vehicle. The management control unit receives galley signals from the galley equipment. The galley signals are indicative of an operational status of the galley equipment. The management control unit may assign the tasks to the attendant device(s) based, at least in part, on the service request signals and the galley signals.

The task manager may also include a database coupled to the management control unit. The database stores passenger data and/or attendant data. The management control unit may assign the tasks to the attendant device(s) based, at least in part, on the service request signals and one or both of the passenger data or the attendant data. In at least one embodiment, the management control unit prioritizes the tasks based, at least in part, on the passenger data or the attendant data stored in the database.

At least one of the attendant device(s) may include a biometric sensor that is configured to detect at least one biometric parameter of the attendant(s). The management control unit may receive biometric signals indicative of the biometric parameter(s) from the biometric sensor. The management control unit may assign the tasks to the attendant device(s) based, at least in part, on the service request signals and the biometric signals. In at least one embodiment, the biometric sensor is configured to detect one or more of heart rate, blood pressure, steps traveled, time of work, or time of rest.

At least one of the attendant devices may include a position sensor that is configured to be tracked by the management control unit. The management control unit may assign the tasks to the attendant device(s) based, at least in part, on the service request signals and the positions of the attendant device(s) within the interior cabin.

In at least one embodiment, the management control unit associates passenger names with the tasks.

The management control unit may also base task distribution and assignments on travel data. The travel data may include, for example, time to destination, current travel status, predicted turbulence, phase of flight, cabin temperature, lavatory status, and/or the like.

Certain embodiments of the present disclosure provide a task management method that is configured to assign tasks to one or more attendants of a vehicle. The task management method includes associating one or more passenger interfaces with one or more passenger seats within an interior cabin of the vehicle; receiving, from the passenger interface(s), service request signals indicative of service requests from passengers that are input into the passenger interface(s); associating one or more attendant devices with one or more attendants that carry the attendant device(s); and communicating between a management control unit of a task manager and the passenger interface(s) and the attendant device(s). The communicating includes receiving, at the management control unit, the service request signals from the passenger interface(s). The method also includes assigning, by the management control unit, tasks to the attendant device(s) based, at least in part, on the service request signals.

Certain embodiments of the present disclosure provide a vehicle including an interior cabin, and a task management system that is configured to assign tasks to attendants within the interior cabin.

### BRIEF DESCRIPTION OF THE DRAWINGS

Figure 1 is a diagrammatic representation of a front perspective view of an aircraft, according to an embodiment of the present disclosure.
Figure 2A is a diagrammatic representation of a top plan view of an interior cabin of an aircraft, according to an embodiment of the present disclosure.
Figure 2B is a diagrammatic representation of a top plan view of an interior cabin of an aircraft, according to an embodiment of the present disclosure.
Figure 3 is a schematic block diagram of a task management system within an interior cabin of a vehicle, according to an embodiment of the present disclosure.
Figure 4 is a schematic block diagram of a task manager, according to an embodiment of the present disclosure.
Figure 5 is a schematic block diagram of an attendant device, according to an embodiment of the present disclosure.
Figure 6 is a simplified perspective front view of an attendant device, according to an embodiment of the present disclosure.
Figure 7 is a diagrammatic representation of a front view of a passenger interface, according to an embodiment of the present disclosure.
Figure 8 is a diagrammatic representation of a front view of a passenger interface, according to an embodiment of the present disclosure.
Figure 9 is a schematic block diagram of galley equipment, according to an embodiment of the present disclosure.
Figure 10 is a flow chart of a method of assigning tasks among attendants within an interior cabin of a vehicle, according to an embodiment of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional elements not having that property.

Certain embodiments of the present disclosure provide a vehicle attendant task management system that includes an attendant device that is configured to be carried by an attendant onboard the vehicle. The attendant device may be a smart watch that is worn by an attendant. Optionally, the attendant device may be various other types of smart devices, such as a handheld smart phone, table, or the like. A task manager is in communication with each attendant device. The task manager includes a task management control unit that assigns tasks to the attendants via the attendant devices based on requests from passengers.

The passengers may input service requests through a vehicle entertainment system secured to a seat, a handheld smart device (such as a smart phone of a passenger), a call button, or the like. When a passenger requests service from an attendant (for example, a food order, beverage order, or other convenience items), the service request is received by the task manager, which analyzes the service request and attendant workloads. Based on the service request and the attendant workloads, the task manager assigns the service request to a particular attendant, and transmits the service request to the attendant device. The attendant device displays the service request to the attendant. The task manager distributes tasks to attendants based on passenger service requests and current attendant task loads, biometrics, attendant activity, attendant positions onboard the vehicle, and/or the like.

The systems and methods of the present disclosure provide intelligent, organized distribution of passenger requests to flight attendants based on one or more of attendant task load, biometric data of attendants, attendant break schedules, safety, attendant seniority, attendant activity, task logistics (for example, distance to particular passengers, galley equipment, and the like), similarity to currently-assigned tasks, frequent flyer priority level, passenger historical preferences, passenger personal connections, vehicle galley data (for example, data received from galley equipment, such as a coffee maker, beverage chiller, oven, and the like), individual distribution of passenger requests to attendants, and/or the like.

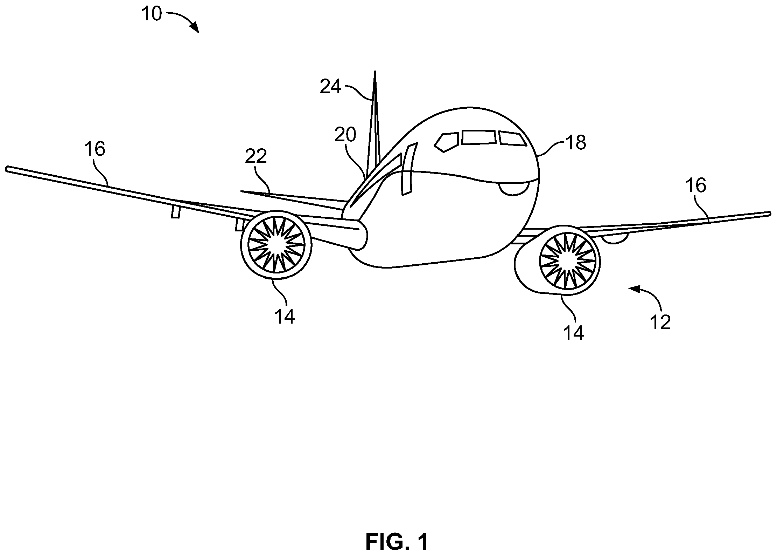

Figure 1 is a diagrammatic representation of a front perspective view of a vehicle, such as an aircraft 10 (or aircraft assembly), according to an embodiment of the present disclosure. The aircraft 10 includes a propulsion system 12 that may include two turbofan engines 14, for example. Optionally, the propulsion system 12 may include more engines 14 than shown. The engines 14 are carried by wings 16 of the aircraft 10. In other embodiments, the engines 14 may be carried by a fuselage 18 and/or an empennage 20. The empennage 20 may also support horizontal stabilizers 22 and a vertical stabilizer 24.

The fuselage 18 of the aircraft 10 defines an interior cabin, which may include a cockpit, one or more work sections (for example, galleys, personnel carry-on baggage areas, and the like), one or more passenger sections (for example, first class, business class, and economy sections), and an aft section. Each of the sections may be separated by a cabin transition area, which may include one or more class divider assemblies. Overhead stowage bin assemblies may be positioned throughout the interior cabin.

An attendant task management system is located within the interior cabin. The attendant task management system includes a task manager that is in communication with a plurality of attendant devices carried by attendants that serve passengers within the interior cabin, as explained below. Alternatively, instead of an aircraft, embodiments of the present disclosure may be used with various other vehicles, such as automobiles, buses, locomotives and train cars, seacraft, spacecraft, and the like.

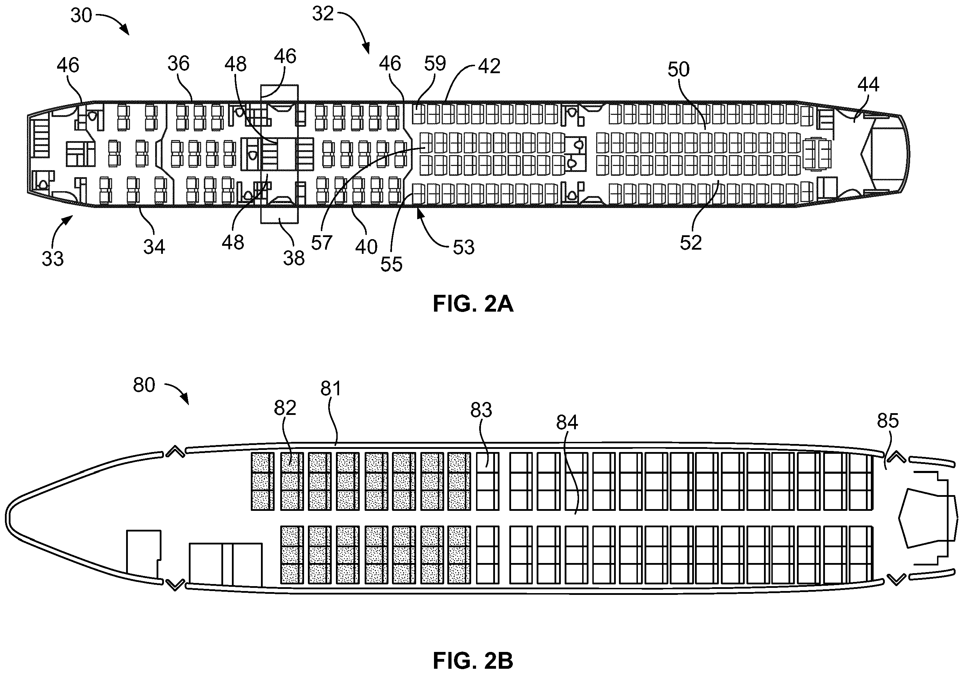

Figure 2A is a diagrammatic representation of a top plan view of an interior cabin 30 of an aircraft, according to an embodiment of the present disclosure. The interior cabin 30 is within a fuselage 32 of the aircraft 10 (shown in Figure 1). For example, one or more fuselage wall members may define the interior cabin 30. The interior cabin 30 includes multiple sections or zones, including a front section 33, a first class section 34, a business class section 36, a front galley station 38, a business or an expanded economy or coach section 40, a standard economy or coach section 42, and an aft section 44, which may include multiple lavatories and galley stations. It is to be understood that the interior cabin 30 may include more or less sections and zones than shown. For example, the interior cabin 30 may not include a first class section, and may include more or less galley stations than shown. Each of the sections may be separated by a cabin transition area 46, which may include class divider assemblies between aisles 48.

As shown in Figure 2A, the interior cabin 30 includes two aisles 50 and 52 that lead to the aft section 44. Optionally, the interior cabin 30 may have less or more aisles than shown. For example, the interior cabin 30 may include a single aisle that extends through the center of the interior cabin 30 that leads to the aft section 44.

As shown, rows 53 of seats are within the interior cabin 30. A row 53 spans across the interior cabin and generally extends across the aisles 50 and 52. Columns 55, 57, and 59 of seat sections are perpendicular to the rows 53. Each seat section may include one or more seats. The columns 55, 57, and 59 generally run parallel with the aisles 50 and 52. A particular section or zone may include any number of columns 55, 57, and 59 of seat sections. As shown in Figure 2A, at least one zone includes three columns 55, 57, and 59 of seat sections. However, each zone may include more or less than three columns. For example, a first class section or zone may include two columns of seat sections.

Figure 2B is a diagrammatic representation of a top plan view of an interior cabin 80 of an aircraft, according to an embodiment of the present disclosure. The interior cabin 80 may be within a fuselage 81 of the aircraft. For example, one or more fuselage wall members may define the interior cabin 80. The interior cabin 80 includes multiple sections or zones, including a main cabin 82 having passenger seats 83, and an aft section 85 behind the main cabin 82. It is to be understood that the interior cabin 80 may include more or less sections or zones than shown.

The interior cabin 80 may include a single aisle 84 that leads to the aft section 85. The single aisle 84 may extend through the center of the interior cabin 80 that leads to the aft section 85.

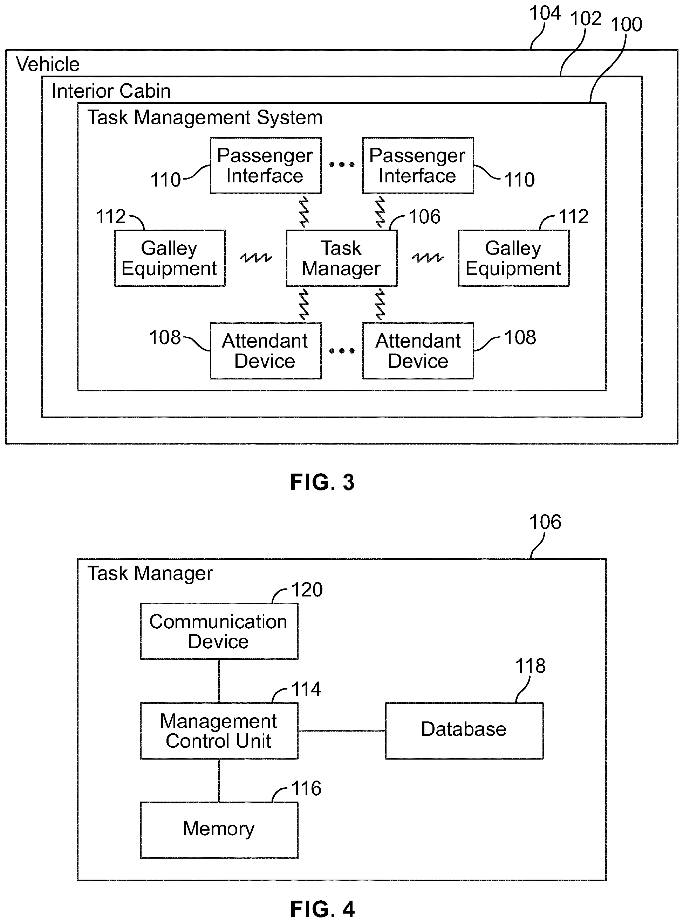

Figure 3 is a schematic block diagram of a task management system 100 within an interior cabin 102 of a vehicle 104, according to an embodiment of the present disclosure. Examples of the interior cabin 102 are shown and described with respect to Figures 2A and 2B. The aircraft 10 shown in Figure 1 is an example of the vehicle 104.

The task management system 100 includes a task manager 106 that is in communication with a plurality of attendant devices 108, which are carried by attendants within the interior cabin 102. The task management system 100 may include more or less attendant devices 108 than shown. For example, a single attendant device 108 may be carried by a single attendant within the interior cabin 102. As another example, three or more attendant devices 108 may be carried by a respective number of attendants within the interior cabin 102. The task manager 106 wirelessly communicates with the attendant devices 108, such as through radio frequency signals, WiFi communication, and/or the like.

The task manager 106 is also in communication with a plurality of passenger interfaces 110, which allow passengers to input service requests that are received by the task manager 106. The task management system 100 may include more or less passenger interfaces 110 than shown. In general, a passenger interface 110 may be associated with each passenger seat within the interior cabin 102. As such, a passenger service request input from a passenger interface 110 associated with a particular seat location (for example, assigned seat location 23A aboard an aircraft) within the interior cabin 102 is recognized by the task manager 106. The task manager 106 is in communication with each of the passenger interfaces 110 through one or more wired or wireless connections.

The task manager 106 is also in communication with galley equipment 112 within the interior cabin 102. The galley equipment 112 is located within galley stations (for example, the front galley station 38 shown in Figure 1) within the interior cabin 102. The galley equipment 112 includes various devices that are used by flight attendants to provide service to passengers. Examples of the galley equipment 112 include coffee makers, beverage chillers, ovens, and the like. The task management system 100 may include more or less galley equipment 112 than shown. In at least one embodiment, the task management system 100 may not include any galley equipment. The task manager 106 is in communication with each of the galley equipment 112 through one or more wired or wireless connections.

In operation, passengers input service requests (for example, request for a beverage, food, a pillow, a blanket, or the like) through the passenger interfaces 110. The service requests are output as service request signals. The task manager 106 receives the service request signals indicative of the service requests. The task manager 106 then assigns the service requests to the attendants within the interior cabin. The task manager outputs the assigned service requests as assigned tasks to the attendant devices 108. The attendants 108 then view the assigned tasks on their respective attendant devices 108 and provide service to the passengers accordingly.

The task manager 106 also receives equipment signals from the galley equipment 112. The equipment signals are indicative of operational status of the galley equipment. For example, the equipment signals may include coffee pot level (for example, full pot or low pot), coffee temperature, beverage chiller temperature, beverage chiller capacity, oven temperature, and/or the like. Based on the equipment signals received from the galley equipment 112, the task manager 106 may assign or otherwise coordinate tasks in relation to the attendants.

In at least one embodiment, the task manager 106 directs components to automatically perform tasks. For example, the task manager 106 may direct various types of galley equipment 112 to automatically perform tasks. As an example, a passenger may request a cup of coffee. The task manager 106, which is in communication with the galley equipment 112 (such as a coffee maker), detects that a coffee pot is empty. The task manager 106 then directs the coffee maker to brew coffee. The coffee maker sends a signal back to the task manager 106 when the brewed coffee is complete. The task manager 106 may then send a signal to a flight attendant that the coffee is ready to be delivered to the requesting passenger.

Figure 4 is a schematic block diagram of the task manager 106, according to an embodiment of the present disclosure. The task manager 106 is onboard the vehicle 104, such as within the interior cabin 102. For example, the task manager 106 may be located within a computer workstation in a galley within the interior cabin 102. As another example, the task manager 106 may be within a computer workstation in a cockpit of the vehicle 104. In general, the task manager 106 may be located anywhere within the vehicle 104. In at least one other embodiment, the task manager 106 may be remotely located from the vehicle, such as with a central, land-based monitoring center.

The task manager 106 includes a management control unit 114 that is operatively coupled to a memory 116, a database 118, and a communication device 120, such as through one or more wired or wireless connections. The memory 116 stores instructions, logic, and the like for the management control unit 114. In at least one embodiment, the memory 116 forms part of the management control unit 114.

The database 118 may store various types of data related to passengers, attendants, trips, and the like. For example, the database 118 may store data related to passenger travel status (for example, frequent flyer status, preferred passengers status, and the like), previous service requests and preferences (for example, particular types of beverages requested), and/or the like.

The communication device 120 allows for wireless communication between the task manager 106 and the attendant devices 108 (and also optionally the passenger interfaces 110 and the galley equipment 112). The communication device 120 may be or otherwise include an antenna, a transceiver, a WiFi system, or the like that allows for wireless communication, such as through WiFi, radio frequency signals, and/or the like.

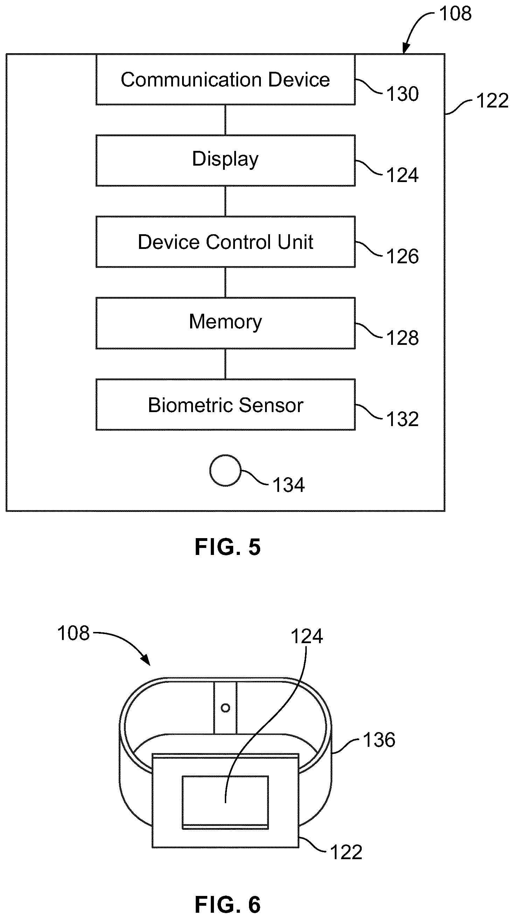

Figure 5 is a schematic block diagram of an attendant device 108, according to an embodiment of the present disclosure. The attendant device 108 is carried by an attendant within the interior cabin 102 of the vehicle 104 (shown in Figure 3). The attendant device 108 includes a main housing 122 that supports a display 124 (such as a touchscreen interface) that is communicatively coupled to a device control unit 126, such as through a wired or wireless connection. The device control unit 126 is also communicatively coupled to a memory 128, such as through a wired or wireless connection. In at least one embodiment, the memory 128 is part of the device control unit 126. The memory 128 stores instructions, logic, and the like for the device control unit 126.

The device control unit 126 is also communicatively coupled to a communication device 130 that allows for wireless communication between the attendant device 108 and the task manager 106. The communication device 130 may be or otherwise include an antenna, a transceiver, a WiFi system, or the like that allows for wireless communication, such as through WiFi, radio frequency signals, and/or the like.

The attendant device 108 also includes one or more biometric sensors 132 that are configured to detect biometric parameters of an attendant that carries the attendant device 108. In at least one embodiment, the biometric sensor 132 includes a heart rate monitor that detects a heart rate of the attendant carrying the attendant device 108. As another example, the biometric sensor 132 includes a blood pressure monitor that detects a blood pressure of the attendant carrying the attendant device 108. As another example, the biometric sensor 132 includes an accelerometer that is configured to detect a number of steps traveled by the attendant carrying the attendant device. As another example, the biometric sensor 132 detects times when the attendant is actively working and resting within the interior cabin 102.

Referring to Figures 3-5, the biometric sensor(s) 132 detects one or more biometric parameters of the attendant carrying the attendant device 130 and outputs associated biometric data of the attendant to the task manager 106 in the form of biometric signals. The management control unit 114 of the task manager 106 receives and analyzes the biometric signals to determine particular tasks to assign to the attendant. For example, the management control unit 114 may determine which attendants are better physically able to perform tasks based on received biometric signals. If the management control unit 114 determines that a biometric parameter of a particular attendant is above a particular pre-defined threshold, the management control unit 114 may refrain assigning that attendant a particular task, and instead assign it to a more refreshed attendant.

The task manager 106 outputs task signals to the attendant device 108 via task signals. The attendant device 108 receives the task signals, and the device control unit 126 displays the assigned tasks to the attendant via the display 124. The display 124 may list the tasks to be performed in order. After completion of a particular task, the attendant may engage the display 124 (such as through a touch screen interface) to indicate that the task has been completed. A completed task signal is then sent to the task manager 106. The management control unit 114 may update tasks to be completed accordingly.

The attendant device 108 may also include a position sensor 134, such as a radio frequency identification (RFID) chip, an antenna, or the like that is configured to be tracked, such as through RFID monitoring, WiFi triangulation, and/or the like. The management control unit 114 may track locations of the position sensors 134 of each of the attendant devices 108 within the interior cabin 102 and assign tasks to be completed based on the locations of the attendants carrying the attendant devices 108. For example, when the management control unit 114 receives a passenger service request, the management control unit 114 determines the location of the passenger that made the request, and then analyzes the positions of the attendants within the interior cabin 108 through the located position sensors 134 of the attendant devices 108. The management control unit 114 may then assign the task to complete the particular service request based on a location of a closest attendant to the particular passenger who made the service request.

Figure 6 is a simplified perspective front view of an attendant device 108, according to an embodiment of the present disclosure. The attendant device 108 may include a securing member 136, such as a band, strap, bracelet, or the like, that allows an attendant to secure the attendant device 108 to a wrist, for example. In this manner, the attendant device 108 may provide a smart watch. By securing the attendant device 108 to the wrist, the attendant is able to free up both hands while working, instead of using one hand to hold the attendant device 108 in order to view the display 124 that is secured to the housing 122. Alternatively, the attendant device 108 may be a handheld device, such as a smart phone, tablet, or the like.

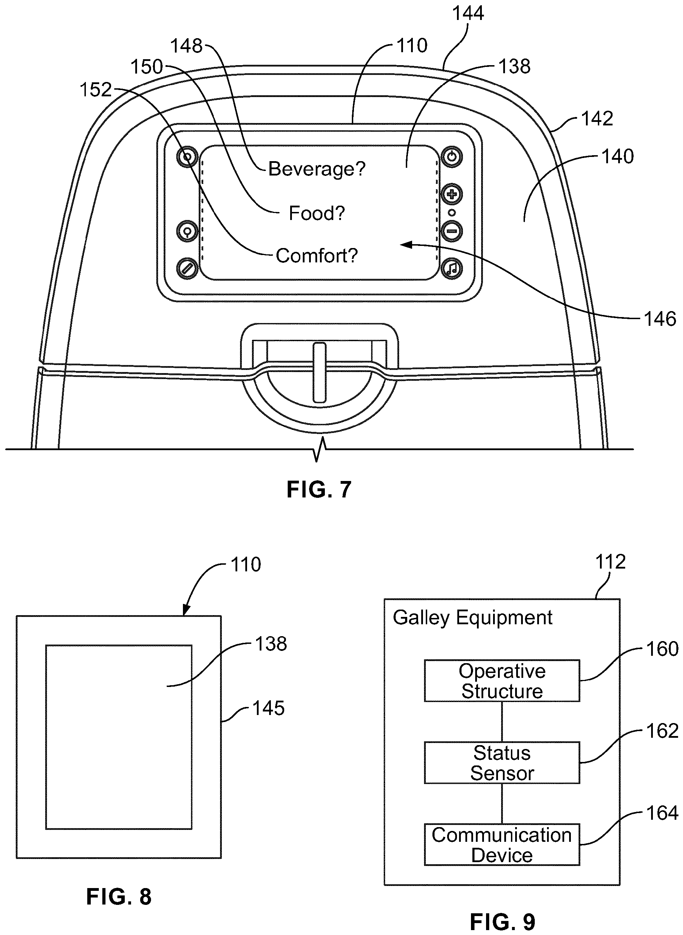

Figure 7 is a diagrammatic representation of a front view of a passenger interface 110, according to an embodiment of the present disclosure. The passenger interface 110 may include a screen 138 (such as a touchscreen monitor, display, or the like) of an entertainment system onboard a vehicle, such as in-flight entertainment system onboard an aircraft. As shown, the screen 138 may be mounted to a rear surface 140 of a headrest 142 of an immediately-forward passenger seat 144 in front of a passenger seat (not shown in Figure 4) associated with the passenger interface 110. In at least one other embodiment, the passenger interface 110 may be mounted to other portions of the immediately-forward passenger seat 144, the passenger seat (not shown), a divider wall within the aircraft, and/or the like.

Figure 8 is a diagrammatic representation of a front view of the passenger interface 110, according to an embodiment of the present disclosure. In at least embodiment, the passenger interface 110 may be part of a smart device 145 of a passenger. For example, the smart device 145 may be part of a handheld smart phone or smart tablet. In at least one other embodiment, the passenger interface 100 may be part of a smart watch worn by a passenger.

Referring again to Figure 7, the passenger interface 110 allows a passenger to enter a service request through a service request mode 146. The service request mode 146 may include various areas that allow the passenger to request particular types of service. For example, a beverage request area 148 allows the passenger to input a service request for a beverage. A food request area 150 allows the passenger to input a service request for food. A comfort request area 152 allows the passenger to input a service request for various items associated with passenger comfort, such as a pillow, blanket, magazine, newspaper, wash cloth, and/or the like.

Referring to Figures 3-7, the passenger inputs the service request via the passenger interface 110. The management control unit 114 receives a service request signal indicative of the service request from the passenger interface 110. The management control unit 114 analyzes the service request signal, as well as attendant availability signals including attendant data (for example, current number of tasks to complete, number of tasks already completed, attendant biometric data, attendant position relative to the passenger that made the service request, and/or the like) received from the attendant devices. Based on the service request signal and the attendant data received from the attendant device(s) 108, the management control unit 114 assigns the service request as a task to a particular attendant carrying an attendant device 108 in the form of a task signal. The particular attendant device 108 to which the task signal is directed displays the particular task (for example, the particular service request and associated passenger location within the interior cabin 102) on the display 124. The attendant may then view the assigned task on the display 124 of the attendant device 108 and fulfill the service request of the passenger.

As such, the attendant may see tasks to be completed without having to view a central workstation. Instead, the attendant may view tasks to be completed via the attendant device 108 carried by the attendant. Further, the passenger may input requests via the passenger interface 110, instead of reaching up to an overhead call button.

Figure 9 is a schematic block diagram of galley equipment 112, according to an embodiment of the present disclosure. The galley equipment 112 includes an operative structure 160 that may be monitored by a status sensor 162. The status sensor 162 is in communication with a communication device 164 (such as those described above) through one or more wired or wireless connections.

The operative structure 160 operates the galley equipment 112 based on a particular feature. For example, the operative structure 160 may be a heater for a coffee pot. As another example, the operative structure 160 may be a refrigerated compartment of a beverage chiller. As another example, the operative structure 160 may be a heated interior chamber of an oven. The status sensor 162 monitors various parameters of the operative structure 160. For example, the status sensor 162 may be a temperature sensor of coffee within a coffee pot, a level sensor of coffee within the coffee pot, a thermometer that detects the temperature of a refrigerated compartment, one or more beverages within the refrigerated compartment, a heated interior chamber of the oven, a food item within the heated interior chamber, and/or the like. The status sensor 162 outputs detected galley data of the galley equipment 112 as a galley signal via the communication device 164.

Referring to Figures 3-9, the management control unit 114 receives the galley signal from the galley equipment 112. The management control unit 114 may monitor the galley signal and base assigned tasks to attendants carrying the attendant devices 108 based on the galley signal. For example, a passenger may input a service request for a cup of coffee via a passenger interface 110. The task manager 106 receives the service request signal indicative of the service request for the cup of coffee. The management control unit 114 analyzes the service request signal as well as the galley signal received from the galley equipment 112 (such as a coffee maker) to determine whether coffee within a pot is full and at a desired temperature. If the coffee is ready, the management control unit 114 may then output a task signal regarding the request by the passenger for coffee to a particular attendant (such as one who is proximate to the galley equipment 112 and the passenger who requested the coffee). If, however, the management control unit 114 determines that the coffee is not ready via the galley signal, the management control unit 114 may delay assigning the task until the coffee is ready.

The task manager may monitor various galley signals associated with various types of galley equipment in a similar manner. The coffee request described above is merely an example. Other examples of galley signals include information related to cold beverages, hot food, cold food, and the like. Alternatively, the task manager 106 may not be in communication with galley equipment.

As described herein, the task manager 106 is configured to assign tasks to attendants within the interior cabin 102 of the vehicle 104 based on service requests of passengers that are input into the passenger interfaces 110 and received by the management control unit 114 as service request signals. The management control unit 114 analyzes the current tasks assigned to the attendants in order to assign the currently received service request signals. The management control unit 114 assigns the service request signals based on one or more of the following: relative workloads of attendants within the interior cabin 102, biometric signals indicative of one or more biometric parameters regarding the attendants received from the attendant devices 108, positions of attendants within the interior cabin 102 relative to a requesting passenger and/or galley equipment 112, and/or galley signals received from the galley equipment 112.

The attendants are able to view the assigned tasks on the displays 124 of the attendant devices 108. After completion of a task, the attendant may engage the attendant device 108 to indicate that the task has been completed. The management control unit 114 of the task manager 106 receives a completed task signal from the attendant device 108 and updates a master task list accordingly.

The management control unit 114 may order and prioritize the master task list (including pending passenger service requests) as they are received. The database 118 stores information regarding passenger status so that, if desired, the management control unit 114 may prioritize service requests of those passengers with elevated travel status (such as based on frequent flyer miles, preferred passenger status indications, and/or the like). In at least one embodiment, the management control unit 114 distributes and assigns tasks to attendants based on workload availability (for example, the number of tasks currently assigned to particular attendants), locations of the attendants within the internal cabin 102, and/or health status (including, for example, heart rate, blood pressure, steps traveled, times working and resting, and/or the like) of the attendants (based on received biometric signals).

In at least one embodiment, the management control unit 114 efficiently distributes and assigns tasks among a plurality of attendants based on locations of the attendants, status of galley equipment, and/or the like, in order to minimize or otherwise reduce traffic within aisles of the vehicle 104. For example, based on galley data received, the management control unit 114 may assign a first attendant a task of activating a particular piece of galley equipment 112, and assign a second attendant that differs from the first attendant a task of delivering an item from the galley equipment 112 to a passenger at a time after initial activation of the galley equipment 112.

The database 118 may store personal preferences for passengers during current travel and/or past travel. Various preferences related to particular types of beverages, foods, comfort and convenience items, and/or the like may be stored in the database 118. The management control unit 114 may consult the stored personal preferences and customize and tailor assigned tasks based on the stored personal preferences.

In at least one embodiment, personal information regarding passengers (such as passenger names associated with seat assignments) may be stored in the database 118. In this manner, the management control unit 114 may display passenger names to attendants via the attendant devices 108 so that the attendants may personally greet passengers when items are delivered to the passengers. In this manner, passenger experiences may be improved due to the personal greetings and perceived familiarity of the attendants. The personal information may be automatically stored in the database 118 (such as through ticketing information), or individually input by the passengers via the passenger interfaces 110.

As described, passengers input service requests through the passenger interfaces 110. The service requests are received by the task manager 106 as service request signals. The task manager 106 forms a master task list, which is updated based on the received service request signals, and completed task signals received from the attendant devices 108. The task manager 106 analyzes attendant availability signals received from the attendant devices 108. The attendant availability signals include information indicative of currently pending tasks to perform and biometric information. Based on the received service request signals from the passenger interfaces 110 and the attendant availability signals received from the attendant devices 108, the management control unit 114 of the task manager 106 distributes and assigns tasks associated with the service requests among the attendants, and transmits assigned task signals to the respective attendant devices 108. The attendant devices 108 display one or more tasks to be fulfilled by the attendants. The task manager 106 may also distribute and assign tasks based on galley signals indicative of galley data received from the galley equipment 112.

The attendant availability signals may also include historical data regarding particular attendants. Optionally, the historical data may be stored in the database 118. For example, the historical data may include the number of particular tasks previously fulfilled by the attendants.

The management control unit 114 may also base task distribution and assignments on travel data. The travel data may include, for example, time to destination, current travel status, predicted turbulence, phase of flight, cabin temperature, lavatory status, and/or the like.

In at least one embodiment, the management control unit 114 may also monitor completion times of tasks for the attendants, which may be stored in the database 118. In this manner, the management control unit 114 may determine that particular attendants are more efficient than others, and base task assignments, at least in part, on such information.

As used herein, the term "controller," "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control units 114 and 126 may be or include one or more processors that are configured to control operations, as described above.

Each of the control units 114 and 126 is configured to execute a set of instructions that are stored in one or more data storage units or elements (such as one or more memories), in order to process data. For example, each of the control units 114 and 126 may include or be coupled to one or more memories. The data storage units may also store data or other information as desired or needed. The data storage units may be in the form of an information source or a physical memory element within a processing machine.

The set of instructions may include various commands that instruct each of the control units 114 and 126 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control units 114 and 126. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, each of the control units 114 and 126 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

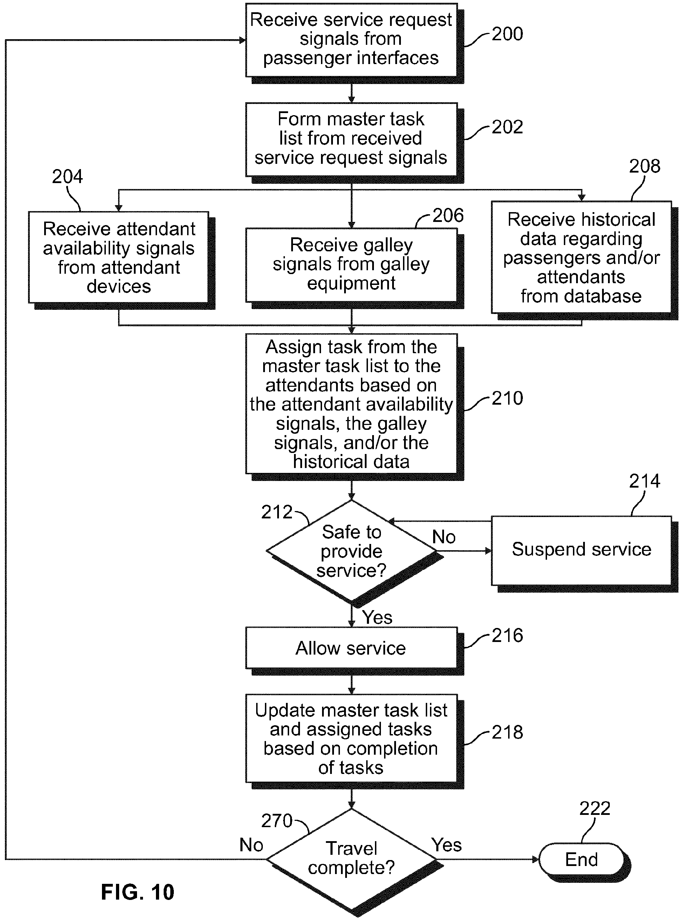

Figure 10 is a flow chart of a method of assigning tasks among attendants within an interior cabin of a vehicle, according to an embodiment of the present disclosure. Referring to Figures 3-10, the method begins at 200, at which the management control unit 114 of the task manager 106 receives service request signals from the passenger interfaces 110. The service request signals are indicative of service requests input into the passenger interfaces 110. At 202, the management control unit 114 forms a master task list from the received service request signals.

At 204, the management control unit 114 receives attendant availability signals from the attendant devices 108. The attendant availability signals are indicative of availability of attendants associated with the attendant devices 108 to fulfill the service requests of the passengers. The attendant availability signals include data that relates to one or more of past and current attendant workloads, attendant health status (as indicated through biometric signals), attendant locations within the interior cabin 102, and/or the like.

At 206, the management control unit 114 receives galley signals from galley equipment 112. The galley signals are indicative of current operational status of various types of galley equipment 112.

At 208, the management control unit 114 receives or otherwise accesses historical data regarding passengers and/or attendants from the database 118. The historical data may include passenger preferences (such as types of beverages, food, comfort items, and the like previously requested), attendant efficiency data (based on previous task completion times), and/or the like.

Steps 204, 206, and 208 may occur at the same time. Optionally, the steps 204, 206, and 208 may occur at different times.

At 210, the management control unit 114 assigns tasks from the master task list to the attendants based on analysis of one or more of the availability signals, the galley signals, and./or the historical data.

At 212, the management control unit 114 determines whether it is safe to provide service. Examples of times when it may not be safe to provide service include particular phases of travel (such as during ascent or descent of a flight), periods of air turbulence, and/or the like. If at 212, the management control unit 114 determines it is not safe to provide service, the method proceeds to 214, at which service is suspended. The method then returns to 212.

If, however, the management control unit 114 determines that it is safe to provide service at 212, the method proceeds to 216, at which service is allowed. At 218, the management control unit updates the master task list and assigned tasks based on completion of tasks. Completed task signals are sent from the attendant devices 108 to the management control unit 114.

At 220, the management control unit 114 determines whether travel is completed. If not, the method returns to 200. If, however, travel is complete at 220, the method ends at 222.

As described herein, embodiments of the present disclosure provide systems and methods of efficiently assigning tasks to attendants on board a vehicle, such as a commercial aircraft. The systems and methods are configured to directly notify the attendants of service requests from passengers. Embodiments of the present disclosure provide systems and methods of monitoring activity of flight attendants.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims.

## Claims

1. A task management system (100) that is configured to assign tasks to one or more attendants of a vehicle (104), the task management system (100) comprising:
one or more passenger interfaces (110) associated with one or more passenger seats (144) within an interior cabin (102) of the vehicle (104), wherein the one or more passenger interfaces (110) are configured to output service request signals indicative of service requests from passengers that are input into the one or more passenger interfaces (110);
one or more attendant devices (108) that are configured to be carried by the one or more attendants; and
a task manager (106) including a management control unit (114) that is in communication with the one or more passenger interfaces (110) and the one or more attendant devices (108), wherein the task manager is configured to analyze attendant workloads, to assign tasks associated with the service requests to a particular attendant device; and
wherein the management control unit (114) is configured to receive the service request signals from the one or more passenger interfaces (110) and to assign tasks to the one or more attendant devices (108) based, at least in part, on the service request signals, attendant workloads, and a distance to a particular passenger and/or a distance to galley equipment.

2. The task management system (100) of claim 1, wherein the one or more attendant devices (108) comprise a smart watch that is configured to be worn on a wrist.

3. The task management system (100) of claim 1 or 2, wherein the one or more passenger interfaces (110) comprise an entertainment system secured to a seat (144).

4. The task management system (100) of any of claims 1-3, wherein the one or more attendant devices (108) comprise a display (124) that is configured to show the tasks assigned by the management control unit (114).

5. The task management system (100) of any of claims 1-4, further comprising galley equipment (112) within the interior cabin (102) of the vehicle (104), wherein the management control unit (114) is configured to receive galley signals from the galley equipment (112), wherein the galley signals are indicative of an operational status of the galley equipment (112), and wherein the management control unit (114) is configured to assign the tasks to the one or more attendant devices (108) based, at least in part, on the service request signals and the galley signals.

6. The task management system (100) of any of claims 1-5, wherein the task manager (106) further comprises a database (118) coupled to the management control unit (114), wherein the database (118) stores one or more of passenger data or attendant data, and wherein the management control unit (114) is configured to assign the tasks to the one or more attendant devices (108) based, at least in part, on the service request signals and one or both of the passenger data or the attendant data, wherein optionally the management control unit (114) prioritizes the tasks based, at least in part, on the passenger data or the attendant data stored in the database (118).

7. The task management system (100) of any of claims 1-6, wherein the one or more attendant devices (108) comprise a biometric sensor that is configured to detect at least one biometric parameter of the one or more attendants, wherein the management control unit (114) is configured to receive biometric signals indicative of the at least one biometric parameter from the biometric sensor, and wherein the management control unit (114) is configured to assign the tasks to the one or more attendant devices (108) based, at least in part, on the service request signals and the biometric signals, wherein optionally the biometric sensor is configured to detect one or more of heart rate, blood pressure, steps traveled, time of work, or time of rest.

8. The task management system (100) of any of claims 1-7, wherein the one or more attendant devices (108) comprise a position sensor that is configured to be tracked by the management control unit (114), wherein the management control unit (114) is configured to assign the tasks to the one or more attendant devices (108) based, at least in part, on the service request signals and positions of the one or more attendant devices (108) within the interior cabin.

9. A method for assigning tasks to one or more attendants of a vehicle (104), the method comprising:
associating one or more passenger interfaces (110) with one or more passenger seats (144) within an interior cabin (102) of the vehicle (104);
receiving, from the one or more passenger interfaces (110), service request signals indicative of service requests from passengers that are input into the one or more passenger interfaces (110);
associating one or more attendant devices (108) with the one or more attendants that carry the one or more attendant devices (108);
communicating between a management control unit (114) of a task manager (106) and the one or more passenger interfaces (110) and the one or more attendant devices (108), wherein the communicating comprises receiving, at the management control unit (114), the service request signals from the one or more passenger interfaces (110), and wherein the task manager is configured to analyze attendant workloads, to assign tasks associated with the service requests to a particular attendant device; and
assigning, by the management control unit (114), tasks to the one or more attendant devices (108) based, at least in part, on the service request signals, attendant workloads, and a distance to a particular passenger and/or a distance to galley equipment.

10. The method of claim 9, wherein the one or more attendant devices (108) comprise a smart watch that is configured to be worn on a wrist, and wherein the one or more passenger interfaces (110) comprise an entertainment system secured to a seat (144).

11. The method of claim 9 or 10, further comprising showing the tasks assigned by the management control unit (114) on a display of the one or more attendant devices (108).

12. The method of any of claims 9-11, further comprising receiving, by the management control unit (114), galley signals from galley equipment (112) within the interior cabin (102) of the vehicle (104), wherein the galley signals are indicative of an operational status of the galley equipment (112), and wherein assigning comprises assigning the tasks to the one or more attendant devices (108) based, at least in part, on the service request signals and the galley signals.

13. The method of any of claims 9-12, further comprising storing one or more of passenger data or attendant data within a database (118), and wherein assigning comprises assigning the tasks to the one or more attendant devices (108) based, at least in part, on the service request signals and one or both of the passenger data or the attendant data, wherein optionally the assigning comprises prioritizing the tasks based, at least in part, on the passenger data or the attendant data stored in the database (118).

14. The method of any of claims 9-13, further comprising receiving biometric signals indicative of at least one biometric parameter of the one or more attendants from a biometric sensor of the one or more attendant devices (108), and wherein the assigning comprises assigning the tasks to the one or more attendant devices (108) based, at least in part, on the service request signals and the biometric signals.

15. The method of any of claims 9-14, further comprising tracking positions of the one or more attendant devices (108) within the interior cabin (102), and wherein the assigning comprises assigning the tasks to the one or more attendant devices (108) based, at least in part, on the service request signals and the positions of the one or more attendant devices (108) within the interior cabin (102).

## Patentansprüche

1. Aufgabenverwaltungssystem (100), das konfiguriert ist, um Aufgaben einem oder mehreren Begleitern eines Fahrzeugs (104) zuzuweisen, wobei das Aufgabenverwaltungssystem (100) umfasst:
eine oder mehrere Fahrgastschnittstellen (110), die mit einem oder mehreren Fahrgastsitzen (144) in einer Innenkabine (102) des Fahrzeugs (104) verbunden sind, wobei die ein oder mehreren Fahrgastschnittstellen (110) konfiguriert sind, um Dienstanforderungssignale auszugeben, die in die ein oder mehreren Fahrgastschnittstellen (110) eingegebene Dienstanforderungen von Fahrgästen anzeigen;
ein oder mehrere Begleitergeräte (108), die konfiguriert sind, um von den ein oder mehreren Begleitern getragen zu werden; und
einen Aufgabenverwalter (106) mit einer Verwaltungssteuereinheit (114), die mit den ein oder den mehreren Passagierschnittstellen (110) und den ein oder mehreren Begleitergeräten (108) in Kommunikationsverbindung steht, wobei der Aufgabenverwalter konfiguriert ist, um die Arbeitsbelastungen der Begleiter zu analysieren, um Aufgaben, die mit den Dienstanforderungen verknüpft sind, einem bestimmten Begleitergerät zuzuweisen; und
wobei die Verwaltungssteuereinheit (114) konfiguriert ist, um die Dienstanforderungssignale von den ein oder mehreren Fahrgastschnittstellen (110) zu empfangen und Aufgaben den ein oder mehreren Begleitergeräten (108) zumindest teilweise auf der Grundlage der Dienstanforderungssignale, der Arbeitsbelastungen der Begleiter und einer Entfernung zu einem bestimmten Fahrgast und/oder einer Entfernung zu einer Bordkücheneinrichtung zuzuweisen.

2. Aufgabenverwaltungssystem (100) nach Anspruch 1, bei dem die ein oder mehreren Begleitergeräte (108) eine Smart Watch umfassen, die konfiguriert ist, um am Handgelenk getragen zu werden.

3. Aufgabenverwaltungssystem (100) nach Anspruch 1 oder 2, bei dem die ein oder mehreren Fahrgastschnittstellen (110) ein Unterhaltungssystem umfassen, das an einem Sitz (144) befestigt ist.

4. Aufgabenverwaltungssystem (100) nach einem der Ansprüche 1-3, bei dem die ein oder mehreren Begleitergeräte (108) eine Anzeige (124) umfassen, die konfiguriert ist, um die von der Verwaltungssteuereinheit (114) zugewiesenen Aufgaben anzuzeigen.

5. Aufgabenverwaltungssystem (100) nach einem der Ansprüche 1-4, das ferner eine Bordkücheneinrichtung (112) in der Innenkabine (102) des Fahrzeugs (104) umfasst,
wobei die Verwaltungssteuereinheit (114) konfiguriert ist, um Bordküchensignale von der Bordkücheneinrichtung (112) zu empfangen, wobei die Bordküchensignale einen Betriebsstatus der Bordkücheneinrichtung (112) anzeigen, und bei dem die Verwaltungssteuereinheit (114) konfiguriert ist, um die Aufgaben den ein oder mehreren Begleitergeräten (108) zumindest teilweise auf der Grundlage der Dienstanforderungssignale und der Bordküchensignale zuzuweisen.

6. Aufgabenverwaltungssystem (100) nach einem der Ansprüche 1-5, bei dem
der Aufgabenverwalter (106) ferner eine Datenbank (118) umfasst, die mit der Verwaltungssteuereinheit (114) gekoppelt ist, wobei die Datenbank (118) Fahrgastdaten und/oder Begleiterdaten speichert, und wobei die Verwaltungssteuereinheit (114) konfiguriert ist, um die Aufgaben den ein oder mehreren Begleitergeräten (108) zumindest teilweise auf der Grundlage der Dienstanforderungssignale und der Fahrgastdaten und/oder der Begleiterdaten zuzuweisen,
wobei optional die Verwaltungssteuereinheit (114) den Aufgaben Prioritäten zuweist, die zumindest teilweise auf den in der Datenbank (118) gespeicherten Passagierdaten oder den Begleiterdaten basieren.

7. Aufgabenverwaltungssystem (100) nach einem der Ansprüche 1-6, wobei die ein oder mehreren Begleitergeräte (108) einen biometrischen Sensor umfassen, der konfiguriert ist, um mindestens einen biometrischen Parameter der ein oder mehreren Begleiter zu erfassen, wobei die Verwaltungssteuereinheit (114) konfiguriert ist, um biometrische Signale, die den mindestens einen biometrischen Parameter anzeigen, von dem biometrischen Sensor zu empfangen, und wobei die Verwaltungssteuereinheit (114) konfiguriert ist, um die Aufgaben einem oder mehreren Begleitgeräten (108) zumindest teilweise auf der Grundlage der Dienstanforderungssignale und der biometrischen Signale zuzuweisen, wobei optional der biometrische Sensor konfiguriert ist, um eine oder mehrere von Herzfrequenz, Blutdruck, zurückgelegten Schritten, Arbeitszeit oder Ruhezeit zu erfassen.

8. Aufgabenverwaltungssystem (100) nach einem der Ansprüche 1-7, bei dem die ein oder mehreren Begleitergeräte (108) einen Positionssensor umfassen, der konfiguriert ist, um von der Verwaltungssteuereinheit (114) nachverfolgt zu werden, wobei die Verwaltungssteuereinheit (114) konfiguriert ist, um die Aufgaben den ein oder mehreren Begleitergeräten (108) zumindest teilweise auf der Grundlage der Dienstanforderungssignale und der Positionen der ein oder mehreren Begleitergeräte (108) innerhalb der Innenkabine zuzuweisen.

9. Verfahren zum Zuweisen von Aufgaben an einen oder mehrere Begleiter eines Fahrzeugs (104), wobei das Verfahren umfasst:
Zuordnen einer oder mehrerer Fahrgastschnittstellen (110) zu einem oder mehreren Fahrgastsitzen (144) innerhalb einer Innenkabine (102) des Fahrzeugs (104);
Empfangen, von den ein oder mehreren Fahrgastschnittstellen (110), von in die ein oder mehreren Fahrgastschnittstellen (110) eingegebenen Dienstanforderungssignalen, die auf Dienstanforderungen von Fahrgästen hinweisen;
Zuordnen einer oder mehrerer Begleitergeräte (108) zu den ein oder mehreren Begleitern, die die ein oder mehreren Begleitergeräte (108) tragen;
Kommunizieren zwischen einer Verwaltungssteuereinheit (114) eines Aufgabenverwalters (106) und den ein oder mehreren Fahrgastschnittstellen (110) und den ein oder mehreren Begleitergeräten (108), wobei das Kommunizieren das Empfangen der Dienstanforderungssignale von den ein oder mehreren Fahrgastschnittstellen (110) an der Verwaltungssteuereinheit (114) umfasst, und wobei der Aufgabenverwalter konfiguriert ist, um die Arbeitslasten der Begleiter zu analysieren, um mit den Dienstanforderungen zusammenhängende Aufgaben einem bestimmten Begleitergerät zuzuweisen; und
Zuweisen von Aufgaben durch die Verwaltungssteuereinheit (114) an ein oder mehrere Begleitergeräte (108) zumindest teilweise auf der Grundlage der Dienstanforderungssignale, der Arbeitsbelastung der Begleiter und einer Entfernung zu einem bestimmten Passagier und/oder einer Entfernung zu Bordkücheneinrichtungen.

10. Verfahren nach Anspruch 9, bei dem die ein oder mehreren Begleitergeräte (108) eine Smart Watch umfassen, die konfiguriert ist, um am Handgelenk getragen zu werden, und bei dem die ein oder mehreren Fahrgastschnittstellen (110) ein an einem Sitz (144) befestigtes Unterhaltungssystem umfassen.

11. Verfahren nach Anspruch 9 oder 10, ferner umfassend das Anzeigen der von der Verwaltungssteuereinheit (114) zugewiesenen Aufgaben auf einer Anzeige der ein oder mehreren Begleitergeräte (108).

12. Verfahren nach einem der Ansprüche 9-11, ferner umfassend das Empfangen von Bordküchensignalen von einer Bordkücheneinrichtung (112) in der Innenkabine (102) des Fahrzeugs (104) durch die Verwaltungssteuereinheit (114), wobei die Bordküchensignale einen Betriebsstatus der Bordkücheneinrichtung (112) anzeigen, und wobei das Zuweisen das Zuweisen der Aufgaben zu den ein oder mehreren Begleitergeräten (108) zumindest teilweise auf der Grundlage der Dienstanforderungssignale und der Bordküchensignale umfasst.

13. Verfahren nach einem der Ansprüche 9-12, das ferner das Speichern von Fahrgastdaten und/oder Begleiterdaten in einer Datenbank (118) umfasst, und wobei das Zuweisen das Zuweisen der Aufgaben zu den ein oder mehreren Begleitergeräten (108) zumindest teilweise auf der Grundlage der Dienstanforderungssignale und der Fahrgastdaten und/oder der Begleiterdaten umfasst, wobei optional das Zuweisen das Priorisieren der Aufgaben zumindest teilweise auf der Grundlage der in der Datenbank (118) gespeicherten Fahrgastdaten und/oder Begleiterdaten umfasst.

14. Verfahren nach einem der Ansprüche 9-13, das ferner das Empfangen biometrischer Signale, die zumindest einen biometrischen Parameter der ein oder mehreren Begleiter anzeigen, von einem biometrischen Sensor der ein oder mehreren Begleitergeräte (108) umfasst, und
bei dem das Zuweisen das Zuweisen der Aufgaben an die ein oder mehreren Begleitergeräte (108) zumindest teilweise auf der Grundlage der Dienstanforderungssignale und der biometrischen Signale umfasst.

15. Verfahren nach einem der Ansprüche 9-14, das ferner das Nachverfolgen von Positionen der ein oder mehreren Begleitergeräte (108) innerhalb der Innenkabine (102) umfasst, und wobei das Zuweisen das Zuweisen der Aufgaben zu den ein oder mehreren Begleitergeräten (108) zumindest teilweise auf der Grundlage der Dienstanforderungssignale und der Positionen der ein oder mehreren Begleitergeräte (108) innerhalb der Innenkabine (102) umfasst.

## Revendications

1. Système de gestion de tâches (100) qui est configuré de manière à affecter des tâches à un ou plusieurs accompagnateurs d'un véhicule (104), le système de gestion de tâches (100) comprenant :
une ou plusieurs interfaces de passagers (110) associées à un ou plusieurs sièges passagers (144) dans une cabine intérieure (102) du véhicule (104), dans lequel ladite une ou lesdites plusieurs interfaces de passagers (110) sont configurées de manière à fournir en sortie des signaux de demande de service indicatifs de demandes de service provenant de passagers, lesquelles sont appliquées en entrée dans ladite une ou lesdites plusieurs interfaces de passagers (110) ;
un ou plusieurs dispositifs d'accompagnateurs (108) qui sont configurés de manière à être transportés par ledit un ou lesdits plusieurs accompagnateurs ; et
un gestionnaire de tâches (106) incluant une unité de commande de gestion (114) qui est en communication avec ladite une ou lesdites plusieurs interfaces de passagers (110) et ledit un ou lesdits plusieurs dispositifs d'accompagnateurs (108), dans lequel le gestionnaire de tâches est configuré de manière à analyser des charges de travail d'accompagnateurs, pour affecter des tâches associées aux demandes de service à un dispositif d'accompagnateur spécifique ; et
dans lequel l'unité de commande de gestion (114) est configurée de manière à recevoir les signaux de demande de service provenant de ladite une ou desdites plusieurs interfaces de passagers (110) et à affecter des tâches à un ou plusieurs dispositifs d'accompagnateurs (108) sur la base, au moins en partie, des signaux de demande de service, des charges de travail d'accompagnateurs, et d'une distance jusqu'à un passager spécifique et/ou d'une distance jusqu'à un matériel d'office.

2. Système de gestion de tâches (100) selon la revendication 1, dans lequel ledit un ou lesdits plusieurs dispositifs d'accompagnateurs (108) comprennent une montre intelligente qui est configurée de manière à être portée au poignet.

3. Système de gestion de tâches (100) selon la revendication 1 ou 2, dans lequel ladite une ou lesdites plusieurs interfaces de passagers (110) comprennent un système de divertissement fixé à un siège (144).

4. Système de gestion de tâches (100) selon l'une quelconque des revendications 1 à 3, dans lequel ledit un ou lesdits plusieurs dispositifs d'accompagnateurs (108) comprennent un écran d'affichage (124) qui est configuré de manière à afficher les tâches affectées par l'unité de commande de gestion (114).

5. Système de gestion de tâches (100) selon l'une quelconque des revendications 1 à 4, comprenant en outre un matériel d'office (112) au sein de la cabine intérieure (102) du véhicule (104), dans lequel l'unité de commande de gestion (114) est configurée de manière à recevoir des signaux d'office en provenance du matériel d'office (112), dans lequel les signaux d'office sont indicatifs d'un état opérationnel du matériel d'office (112), et dans lequel l'unité de commande de gestion (114) est configurée de manière à affecter les tâches audit un ou auxdits plusieurs dispositifs d'accompagnateurs (108) sur la base, au moins en partie, des signaux de demande de service et des signaux d'office.

6. Système de gestion de tâches (100) selon l'une quelconque des revendications 1 à 5, dans lequel le gestionnaire de tâches (106) comprend en outre une base de données (118) couplée à l'unité de commande de gestion (114), dans lequel la base de données (118) stocke une ou plusieurs données parmi des données de passagers et des données d'accompagnateurs, et dans lequel l'unité de commande de gestion (114) est configurée de manière à affecter les tâches audit un ou auxdits plusieurs dispositifs d'accompagnateurs (108) sur la base, au moins en partie, des signaux de demande de service, et de l'une ou les deux parmi les données de passagers et les données d'accompagnateurs, dans lequel, facultativement, l'unité de commande de gestion (114) priorise les tâches sur la base, au moins en partie, des données de passagers ou des données d'accompagnateurs stockées dans la base de données (118).

7. Système de gestion de tâches (100) selon l'une quelconque des revendications 1 à 6, dans lequel ledit un ou lesdits plusieurs dispositifs d'accompagnateurs (108) comprennent un capteur biométrique qui est configuré de manière à détecter au moins un paramètre biométrique dudit un ou desdits plusieurs accompagnateurs, dans lequel l'unité de commande de gestion (114) est configurée de manière à recevoir des signaux biométriques indicatifs dudit au moins un paramètre biométrique en provenance du capteur biométrique, et dans lequel l'unité de commande de gestion (114) est configurée de manière à affecter les tâches audit un ou auxdits plusieurs dispositifs d'accompagnateurs (108), sur la base, au moins en partie, des signaux de demande de service et des signaux biométriques, dans lequel, facultativement, le capteur biométrique est configuré de manière à détecter un ou plusieurs éléments parmi une fréquence cardiaque, une pression sanguine, des pas parcourus, un temps de travail ou un temps de repos.

8. Système de gestion de tâches (100) selon l'une quelconque des revendications 1 à 7, dans lequel ledit un ou lesdits plusieurs dispositifs d'accompagnateurs (108) comprennent un capteur de position qui est configuré de manière à être suivi par l'unité de commande de gestion (114), dans lequel l'unité de commande de gestion (114) est configurée de manière à affecter les tâches audit un ou auxdits plusieurs dispositifs d'accompagnateurs (108), sur la base, au moins en partie, des signaux de demande de service et de positions dudit un ou desdits plusieurs dispositifs d'accompagnateurs (108) au sein de la cabine intérieure.

9. Procédé d'affectation de tâches à un ou plusieurs accompagnateurs d'un véhicule (104), le procédé comprenant les étapes ci-dessous consistant à :
associer une ou plusieurs interfaces de passagers (110) à un ou plusieurs sièges passagers (144) dans une cabine intérieure (102) du véhicule (104) ;
recevoir, en provenance de ladite une ou desdites plusieurs interfaces de passagers (110), des signaux de demande de service indicatifs de demandes de service provenant de passagers, lesquelles sont appliquées en entrée dans ladite une ou lesdites plusieurs interfaces de passagers (110) ;
associer un ou plusieurs dispositifs d'accompagnateurs (108) audit un ou auxdits plusieurs accompagnateurs qui transportent ledit un ou lesdits plusieurs dispositifs d'accompagnateurs (108) ;
communiquer entre une unité de commande de gestion (114) d'un gestionnaire de tâches (106) et ladite une ou lesdites plusieurs interfaces de passagers (110) et ledit un ou lesdites plusieurs dispositifs d'accompagnateurs (108), dans lequel l'étape de communication comprend l'étape consistant à recevoir, au niveau de l'unité de commande de gestion (114), les signaux de demande de service, en provenance de ladite une ou desdites plusieurs interfaces de passagers (110), et dans lequel le gestionnaire de tâches est configuré de manière à analyser les charges de travail d'accompagnateurs, pour affecter des tâches associées aux demandes de service à un dispositif d'accompagnateur spécifique ; et
affecter, par le biais de l'unité de commande de gestion (114), des tâches, audit un ou auxdits plusieurs dispositifs d'accompagnateurs (108), sur la base, au moins en partie, des signaux de demande de service, de charges de travail d'accompagnateurs, et d'une distance jusqu'à un passager spécifique et/ou d'une distance jusqu'au matériel d'office.

10. Procédé selon la revendication 9, dans lequel ledit un ou lesdits plusieurs dispositifs d'accompagnateurs (108) comprennent une montre intelligente qui est configurée de manière à être portée au poignet, et dans lequel ladite une ou lesdites plusieurs interfaces de passagers (110) comprennent un système de divertissement fixé à un siège (144) .

11. Procédé selon la revendication 9 ou 10, comprenant en outre l'étape consistant à afficher les tâches affectées par l'unité de commande de gestion (114) sur un écran d'affichage dudit un ou desdits plusieurs dispositifs d'accompagnateurs (108).

12. Procédé selon l'une quelconque des revendications 9 à 11, comprenant en outre l'étape consistant à recevoir, par le biais de l'unité de commande de gestion (114), des signaux d'office en provenance du matériel d'office (112) au sein de la cabine intérieure (102) du véhicule (104), dans lequel les signaux d'office sont indicatifs d'un état opérationnel du matériel d'office (112), et dans lequel l'étape d'affectation consiste à affecter les tâches audit un ou auxdits plusieurs dispositifs d'accompagnateurs (108), sur la base, au moins en partie, des signaux de demande de service et des signaux d'office.

13. Procédé selon l'une quelconque des revendications 9 à 12, comprenant en outre l'étape consistant à stocker une ou plusieurs données parmi des données de passagers et des données d'accompagnateurs, dans une base de données (118), et dans lequel l'étape d'affectation consiste à affecter les tâches audit un ou auxdits plusieurs dispositifs d'accompagnateurs (108), sur la base, au moins en partie, des signaux de demande de service et de l'une ou des deux parmi les données de passagers et les données d'accompagnateurs, dans lequel, facultativement, l'étape d'affectation comprend l'étape consistant à prioriser les tâches, sur la base, au moins en partie, des données de passagers ou des données d'accompagnateurs stockées dans la base de données (118).

14. Procédé selon l'une quelconque des revendications 9 à 13, comprenant en outre l'étape consistant à recevoir des signaux biométriques indicatifs d'au moins un paramètre biométrique dudit un ou desdites plusieurs accompagnateurs, en provenance d'un capteur biométrique dudit un ou desdites plusieurs dispositifs d'accompagnateurs (108), et dans lequel l'étape d'affectation consiste à affecter les tâches audit un ou auxdits plusieurs dispositifs d'accompagnateurs (108) sur la base, au moins en partie, des signaux de demande de service et des signaux biométriques.

15. Procédé selon l'une quelconque des revendications 9 à 14, comprenant en outre l'étape consistant à suivre des positions dudit un ou desdits plusieurs dispositifs d'accompagnateurs (108) au sein de la cabine intérieure (102), et dans lequel l'étape d'affectation consiste à affecter les tâches audit un ou auxdits plusieurs dispositifs d'accompagnateurs (108), sur la base, au moins en partie, des signaux de demande de service et des positions dudit un ou desdites plusieurs dispositifs d'accompagnateurs (108) au sein de la cabine intérieure (102).
